# FASCICULE DE BREVET EUROPEEN

(11) **EP 4 490 486 B1**
(45) Date de publication et mention de la délivrance du brevet: **21.10.2026**
(21) Numéro de dépôt: 23709149.1
(22) Date de dépôt: 01.03.2023
(51) Int. Cl.: G01M 5/00, G01M 99/00, B60N 2/00, B64D 11/06, B64D 25/00, B60N 2/90

(54) **SYSTEME DE MESURE DE LA FATIGUE D'UNE STRUCTURE MECANIQUE**
SYSTEM ZUR MESSUNG DER ERMÜDUNG EINER MECHANISCHEN STRUKTUR
SYSTEM FOR MEASURING THE FATIGUE OF A MECHANICAL STRUCTURE

(30) Priorité: 07.03.2022 FR 2201932
(43) Date de publication de la demande: 15.01.2025
(73) Titulaire: SAFRAN, 75015 Paris (FR); Safran Seats, 78370 Plaisir (FR)
(72) Inventeur: BSILI, Raed, 77550 MOISSY-CRAMAYEL (FR); HADJRIA, Rafik, 77550 MOISSY-CRAMAYEL (FR)
(74) Mandataire: Marconnet, Sébastien
(86) Numéro de dépôt international: PCT/EP2023/055126
(87) Numéro de publication internationale: WO 2023/169895

(56) Documents cités:
- WO-A1-2017/076518
- US-A1- 2007 282 545
- US-A1- 2019 072 442
- US-A1- 2021 237 617

## Description

La présente invention porte sur un système de mesure de la fatigue d'une structure mécanique. L'invention trouve une application particulièrement avantageuse, mais non exclusive, avec les sièges d'avion. Toutefois, l'invention pourra également être mise en œuvre avec les sièges d'autres moyens de transport, comme par exemple les sièges installés dans les véhicules automobiles, les trains, ou les bateaux et plus généralement avec tout système mécanique dans lequel au moins deux pièces sont liées mécaniquement entre elles.

Les règles de sécurité imposent aux compagnies aériennes un suivi de la fatigue des pièces des sièges d'avion, dans la mesure où ces derniers sont soumis à de fortes contraintes (ou charges) mécaniques. Les sièges font donc l'objet d'une révision (ou maintenance) de manière régulière et récurrente. De plus, pour des raisons liées à l'image de marque de la compagnie aérienne et de l'équipementier, il est important de mettre en place un suivi *in-situ* de l'état de santé des pièces des sièges.

Lors d'une phase de maintenance, la cabine d'un avion est inspectée pour détecter les éventuels dysfonctionnements. Certains défauts du siège ne sont pas facilement visibles à l'œil nu et peuvent nécessiter des tests de fonctionnement qui peuvent être longs à effectuer.

En outre, lorsqu'un défaut n'est pas détecté ou est détecté tardivement par les équipes de maintenance, le personnel de bord, ou dans le pire des cas par le passager, cela peut conduire à une insatisfaction du passager, à une mauvaise image de la compagnie aérienne, ou à une durée de maintenance excessive dans la mesure où le remplacement de la pièce n'a pas pu être anticipé.

Le document US2007/282545 décrit un procédé statistique pour l'analyse des ondes de contrainte générées dans des machines ou des équipements en fonctionnement. Cette technique est appelée "analyse probabiliste des ondes de stress". Le procédé est appliqué à une population de valeurs «caractéristiques» individuelles extraites d'une forme d'onde temporelle numérisée.

Le document US2019/072442 décrit un système de surveillance de vérin à gaz comprenant un ensemble d'articulation relié à une extrémité de base du vérin à gaz. L'ensemble d'articulation comprend au moins une jauge de contrainte et une articulation déformable. Le système comprend également un contrôleur en communication avec au moins une jauge de contrainte qui est configuré pour mesurer une déformation de l'articulation déformable via la jauge de contrainte. Le système évalue la performance du vérin à gaz sur la base de la déformation mesurée.

Le document WO2017/076518 décrit un système de management d'une cabine d'aéronef comportant une unité de contrôle et au moins un capteur, notamment un capteur de charge, destiné à être intégrés dans un siège et apte à établir une communication avec l'unité de contrôle pour transmettre à l'unité de contrôle au moins un signal relatif à au moins une mesures réalisée par le capteur, notamment le capteur de charge.

Le document US2021/237617 décrit un siège comprenant un corps de siège, un capteur, un contrôleur de siège autorisé à acquérir une valeur de mesure à partir du capteur, un dispositif d'instruction d'expérience connecté au contrôleur de siège, configuré pour notifier à un occupant assis sur le corps de siège une instruction de mouvement; et un serveur capable de communiquer avec le dispositif d'instruction d'expérience. Le dispositif d'instruction d'expérience effectue une détection sur la base d'une valeur de mesure du capteur pour savoir si une condition est satisfaite ou non, et pour transmettre un résultat de la détection au serveur lorsque la condition est satisfaite.

L'invention vise à remédier efficacement à cet inconvénient en proposant un système de mesure de la fatigue d'une structure mécanique comportant:
- un premier capteur d'effort apte à générer un premier signal représentatif d'un effort appliqué sur une première pièce mécanique de la structure mécanique,
- un deuxième capteur d'effort apte à générer un deuxième signal représentatif d'un effort appliqué sur une deuxième pièce mécanique de la structure mécanique, et
- un module électronique de traitement configuré pour calculer un coefficient de corrélation entre le premier signal et le deuxième signal, et pour indiquer un état de fatigue de la structure mécanique en fonction d'une évolution temporelle du coefficient de corrélation préalablement calculé.

L'invention permet ainsi, grâce à l'analyse du coefficient de corrélation entre les deux signaux générés par les capteurs d'effort intégrés dans la structure articulée, de détecter de façon automatique un dysfonctionnement d'une pièce mécanique avant même sa survenance.

Selon une réalisation de l'invention, le premier signal et le deuxième signal sont acquis sur une pluralité de périodes d'acquisition correspondant chacune à un cycle de fonctionnement, le coefficient de corrélation entre le premier signal et le deuxième signal étant calculé sur chaque période d'acquisition.

Selon une réalisation de l'invention, le module électronique de traitement est configuré pour déterminer des indicateurs mathématiques pour chaque signal sur chaque période d'acquisition, tels qu'une moyenne, un minimum, un maximum, un écart type.

Selon une réalisation de l'invention, le module électronique de traitement est configuré pour calculer le coefficient de corrélation uniquement lorsqu'une variation de charge est détectée par le premier capteur d'effort et/ou le deuxième capteur d'effort.

Selon une réalisation de l'invention, la variation de charge est détectée lorsqu'un écart type et/ou une dérivation temporelle du premier signal et/ou du deuxième signal est supérieur(e) à un seuil prédéterminé.

Selon une réalisation de l'invention, le coefficient de corrélation calculé est choisi parmi le coefficient de Pearson ou le coefficient de Spearman ou est obtenu à partir d'une corrélation croisée ("cross-correlation" selon la terminologie anglo-saxonne).

Selon une réalisation de l'invention, le premier capteur d'effort et le deuxième capteur d'effort sont des jauges de déformation.

L'invention a également pour objet un siège d'avion comportant:
- une structure mécanique constituée par un dossier associé à une pièce de liaison ainsi qu'une crosse sur laquelle est fixée la pièce de liaison, et
- un système de mesure de la fatigue tel que précédemment défini.

Selon une réalisation de l'invention, le premier capteur d'effort est disposé sur la crosse et le deuxième capteur d'effort est disposé sur la pièce de liaison.

Selon une réalisation de l'invention, la pièce de liaison est montée sur la crosse par l'intermédiaire d'une liaison pivot.

Selon une réalisation de l'invention, ledit siège d'avion comporte en outre un accoudoir monté sur la crosse, le premier capteur d'effort étant disposé sur la crosse et le deuxième capteur d'effort étant disposé sur l'accoudoir.

Selon une réalisation de l'invention, ledit siège d'avion comporte en outre une tablette repas montée rotative par rapport au dossier, le premier capteur d'effort étant disposé sur le dossier et le deuxième capteur d'effort étant disposé sur la crosse.

La présente invention sera mieux comprise et d'autres caractéristiques et avantages apparaîtront encore à la lecture de la description détaillée qui suit comprenant des modes de réalisation donnés à titre illustratif en référence avec les figures annexées, présentées à titre d'exemples non limitatifs, qui pourront servir à compléter la compréhension de la présente invention et l'exposé de sa réalisation et, le cas échéant, contribuer à sa définition, sur lesquelles:
[Fig. 1] La figure 1 est une représentation schématique d'une structure mécanique sur laquelle est intégré un système de mesure de la fatigue;
[Fig. 2] La figure 2 est une représentation graphique de l'évolution, en fonction d'un nombre de cycles de fonctionnement de la structure mécanique, d'un coefficient de corrélation entre les deux signaux issus des capteurs d'effort intégrés sur des pièces de ladite structure mécanique;
[Fig. 3a] [Fig. 3b] Les figures 3a et 3b sont des vues en perspective avant et arrière d'un siège d'avion intégrant un système de mesure de la fatigue selon la présente invention;
[Fig. 4] La figure 4 est une vue en perspective illustrant l'intégration d'un capteur d'effort sur une crosse du siège des figures 3a et 3b;
[Fig. 5] La figure 5 est une représentation schématique de la structure mécanique entre la pièce de liaison d'un dossier et la crosse du siège des figures 3a et 3b;
[Fig. 6] La figure 6 est une représentation graphique de l'évolution, en fonction d'un nombre de cycles de fonctionnement du dossier, d'un coefficient de corrélation entre les signaux issus des capteurs d'effort intégrés respectivement sur l'élément de fixation d'un dossier et la crosse du siège des figures 3a et 3b.

Il est à noter que, sur les figures, les éléments structurels et/ou fonctionnels communs aux différents modes de réalisation peuvent présenter les mêmes références. Ainsi, sauf mention contraire, de tels éléments disposent de propriétés structurelles, dimensionnelles et matérielles identiques.

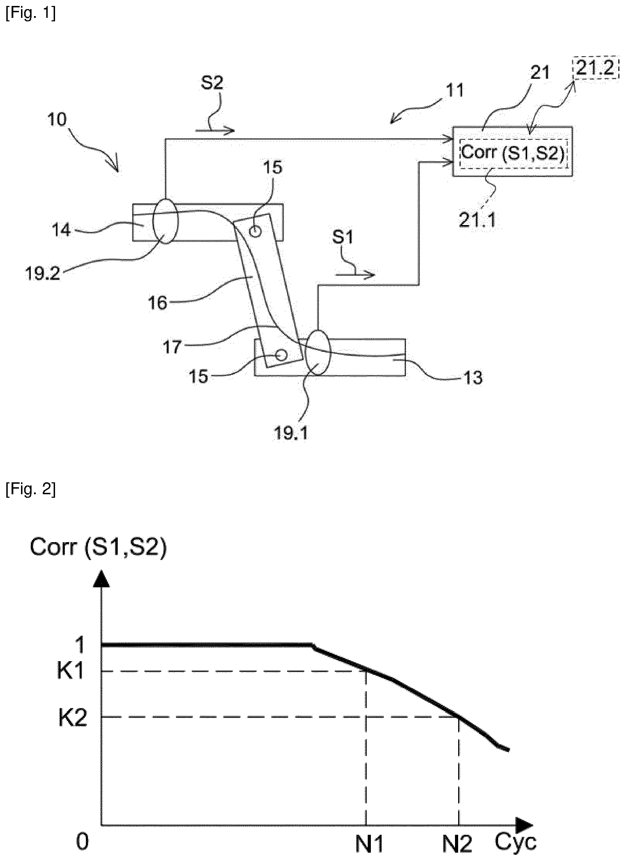

La figure 1 montre une structure mécanique 10 sur laquelle est installé un système de mesure de la fatigue 11. La structure mécanique 10 comporte au moins une première pièce mécanique 13 et une deuxième pièce mécanique 14 connectées mécaniquement entre elles. La ou les liaisons mécaniques 15 entre les pièces mécaniques 13, 14 pourront être des liaisons rigides, c'est à dire des liaisons 15 sans degré de liberté, ou des liaisons 15 présentant au moins un degré de liberté en rotation, comme par exemple une liaison pivot. La pièce mécanique 13 pourra donc notamment être montée mobile en rotation ou montée fixe par rapport à la pièce mécanique 14.

La structure mécanique 10 est apte à transmettre un effort suivant une chaîne de transmission d'effort 17 entre la première pièce 13 et la deuxième pièce extrême 14. Une ou plusieurs pièces intermédiaires 16 assurent la transmission de l'effort de la première pièce extrême 13 vers la deuxième pièce extrême 14 suivant la chaîne de transmission d'effort 17. Suivant certains modes de réalisation, il n'existe aucune pièce intermédiaire 16 entre la première pièce mécanique 13 et la deuxième pièce mécanique 14 de la structure mécanique 10 qui sont alors directement connectées mécaniquement entre elles via une ou plusieurs liaisons mécaniques 15.

Le système de mesure de la fatigue 11 comporte un premier capteur d'effort 19.1 disposé sur la première pièce mécanique 13 et un deuxième capteur d'effort 19.2 disposé sur la deuxième pièce mécanique 14. Le premier capteur d'effort 19.1 est apte à générer un premier signal S1 représentatif d'un effort appliqué sur la première pièce mécanique 13 de la structure mécanique 10. Le deuxième capteur d'effort 19.2 est apte à générer un deuxième signal S2 représentatif d'un effort appliqué sur la deuxième pièce mécanique 14 de la structure mécanique 10.

Le premier capteur d'effort 19.1 et le deuxième capteur d'effort 19.2 sont de préférence des capteurs analogiques, tels que des jauges de déformation. Ces jauges de type piézorésistif permettent de traduire la déformation d'une pièce en variation de résistance électrique (plus les extensomètres s'étirent, plus leurs résistances augmentent). Ces jauges consistent en des spires rapprochées et sont généralement fabriquées à partir d'une mince feuille métallique (quelques micromètres d'épaisseur) et d'un isolant électrique. Alternativement, il est possible d'utiliser un capteur de vibrations ou tout autre type de capteur adapté à l'application tel qu'un capteur d'effort à base de nanotubes de carbone qui pourrait être intégré dans une pièce en matériau composite de la structure mécanique. Un capteur à base de nanotubes comporte une pluralité de fullerènes très denses ayant un très faible poids. Le capteur à base de nanotubes peut être disposé sur une face externe de la pièce ou intégré à l'intérieur du matériau composite de la pièce. Dès que la pièce est soumise à un effort, la résistance électrique du capteur à base de nanotubes est modifiée. Le capteur génère un signal, notamment un signal de courant, représentatif de cette variation de résistance électrique et donc du niveau d'effort appliqué sur la pièce.

Dans le cas où la température de la cabine est soumise à une variation entre les acquisitions, des capteurs résistifs ayant une configuration en pont de Wheatstone peuvent être utilisés afin de palier à cette variation dans le signal mesuré. D'autres méthodes numériques peuvent être utilisées pour corriger les erreurs de mesures induites par des variations thermiques.

Le système de mesure de la fatigue 11 comporte également un module électronique de traitement 21 auquel sont connectés électriquement le premier capteur d'effort 19.1 et le deuxième capteur d'effort 19.2. La connexion entre le module électronique de traitement 21 et les capteurs d'efforts 19.1, 19.2 pourra être effectuée via une liaison filaire ou une liaison sans-fil. Le module électronique de traitement 21 pourra prendre la forme d'un microcontrôleur standard comportant un microprocesseur et des mémoires. Le module électronique de traitement 21 pourra être un module autonome embarquant une batterie rechargeable, une pile, un supercondensateur ou toute autre source d'énergie électrique adaptée à l'application.

Le module électronique de traitement 21 effectue l'acquisition du premier signal S1 et du deuxième signal S2 sur une pluralité de périodes d'acquisition correspondant chacune à un cycle de fonctionnement de la structure mécanique 10.

Le module électronique de traitement 21 est configuré pour calculer un coefficient de corrélation entre le premier signal S1 et le deuxième signal S2 sur chaque période d'acquisition. Une période d'acquisition est par exemple comprise entre 5s et 30s et vaut de préférence de l'ordre de 20s.

Le module électronique de traitement 21 est également configuré pour déterminer des indicateurs mathématiques pour chaque signal sur chaque période d'acquisition tels que notamment une moyenne, un minimum, un maximum, et un écart type.

Le module électronique de traitement 21 est également configuré pour calculer un coefficient de corrélation Corr(S1, S2) entre le premier signal S1 et le deuxième signal S2. Le coefficient de corrélation Corr(S1, S2) est représentatif du transfert mécanique entre les deux pièces 13, 14 du ou des efforts appliqués sur chaque pièce 13, 14 indépendamment des niveaux d'effort appliqués sur chaque pièce 13, 14. Le coefficient de corrélation Corr(S1, S2) calculé est choisi de préférence parmi le coefficient de Pearson ou le coefficient de Spearman ou est obtenu à partir d'une corrélation croisée ("cross-correlation" selon la terminologie anglo-saxonne). Alternativement, il serait toutefois possible d'utiliser tout autre coefficient de corrélation adapté à l'application.

Le module électronique de traitement 21 est apte à indiquer un état de fatigue de la structure mécanique 10 en fonction d'une évolution temporelle du coefficient de corrélation Corr(S1, S2) préalablement calculé.

De préférence, le module électronique de traitement 21 est configuré pour calculer le coefficient de corrélation Corr(S1, S2) uniquement lorsqu'une variation de charge est détectée par le premier capteur d'effort 19.1 et/ou le deuxième capteur d'effort 19.2. La variation de charge est détectée lorsqu'un écart type et/ou une dérivation temporelle du premier signal S1 et/ou du deuxième signal S2 est supérieur(e) à un seuil prédéterminé.

En variante, le module électronique de traitement 21 pourra comporter un premier sous-module de traitement local 21.1 destiné à calculer le ou les indicateurs mathématiques, en particulier le coefficient de corrélation Corr(S1, S2). Le module électronique de traitement 21 comporte un deuxième sous-module de traitement déporté 21.2, tel qu'une plateforme logicielle distante. Suivant ce mode de réalisation, l'analyse précitée de l'évolution temporelle du coefficient de corrélation Corr(S1, S2) pour en déduire l'état de fatigue de la structure mécanique 10 peut être effectuée par la plateforme logicielle distante 21.2 sur la base des indicateurs mathématiques calculés par le premier sous-module de traitement 21.1.

La figure 2 montre l'évolution du coefficient de corrélation Corr(S1, S2) en fonction du nombre de cycles de fonctionnement Cyc de la structure mécanique 10. En début de vie de la structure mécanique 10, l'effort appliqué sur une des pièces mécaniques 13, 14 est transmis mécaniquement de façon optimale vers l'autre pièce mécanique 13, 14 via la chaîne de transmission d'effort 17. Le coefficient de corrélation Corr(S1, S2) est alors maximum.

Lorsque le module électronique de traitement 21 détecte, après un nombre de cycles de fonctionnement N1, que le coefficient de corrélation Corr(S1, S2) devient inférieur à un seuil limite de fatigue K1, cela signifie que l'effort ne se transmet plus de façon optimale et donc que la structure mécanique 10 commence à fatiguer. Cela induit ainsi un inconfort dans le cas où la structure mécanique 10 appartient à un meuble, tel qu'un siège ou un lit accueillant une personne.

Lorsque le module électronique de traitement 21 détecte, après un nombre de cycle de fonctionnement N2, que le coefficient devient inférieur à un seuil de casse K2, cela signifie qu'une pièce de la structure mécanique 10 est cassée. La casse peut se produire sur la première pièce 13, la deuxième pièce 14, ou le cas échéant une pièce intermédiaire 16 de la structure mécanique 10. Autrement dit, le système de mesure de la fatigue 11 permet de détecter le dysfonctionnement de toute pièce se trouvant dans la chaîne de transmission d'effort entre les deux pièces 13, 14 sur lesquelles sont disposés les capteurs d'effort 19.1, 19.2.

Le module électronique de traitement 21 pourra émettre un signal d'alerte, par exemple un signal lumineux et/ou un signal sonore, lorsqu'il détecte que le coefficient de corrélation Corr(S1, S2) passe en dessous du seuil limite de fatigue K1. Un signal d'alerte pourra également être émis lorsque le module électronique de traitement 21 détecte que le coefficient de corrélation Corr(S1, S2) passe en dessous du seuil de casse K2. Toutefois, l'intérêt de l'invention est d'alerter l'utilisateur avant la casse effective d'une pièce de la structure mécanique 10. Le seuil limite de fatigue K1, et le cas échéant le seuil de casse K2, sont prédéterminés lors de tests préalables de la structure mécanique 10 dont l'état de fatigue est à contrôler au cours du temps.

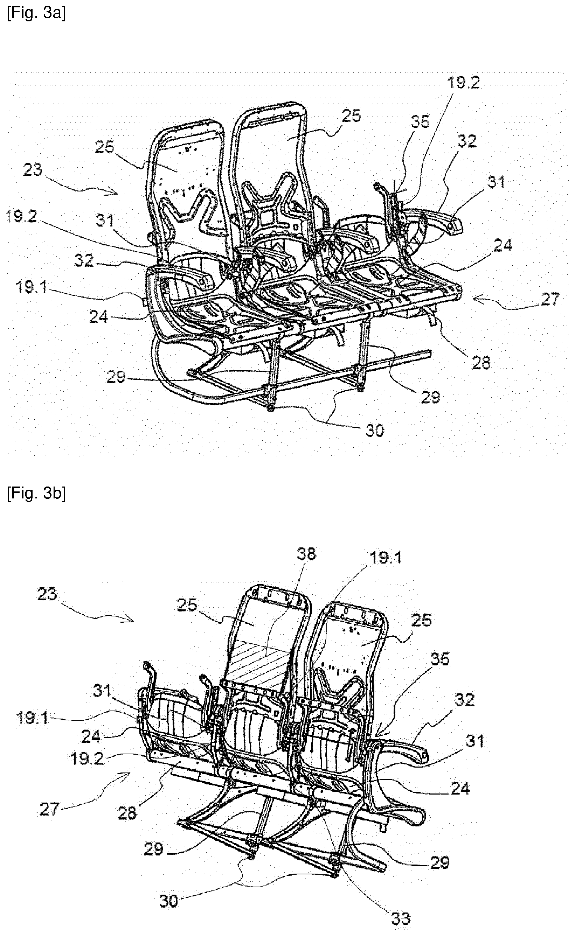

Les figures 3a et 3b illustrent l'intégration d'un système de mesure de la fatigue 11 selon l'invention sur un siège 23 destiné à être installé dans une cabine d'aéronef. Le siège 23 d'avion comporte au moins une assise 24 et au moins un dossier 25 définissant une place. En l'occurrence, le siège 23 comporte trois assises 24 et trois dossiers 25 définissant trois places. Ce nombre de places pourra bien entendu être adapté en fonction du besoin.

Les assises 24 et les dossiers 25 sont montés sur une structure de siège 27. Cette structure de siège 27 comporte des poutres de renforcement transversal 28. Des pieds de support 29 sont destinés à supporter l'assise 24. Ces pieds de support 29 sont munis de verrous 30 pour assurer la fixation par serrage du siège 23 sur des rails (non représentés) disposés sur le plancher de la cabine d'aéronef.

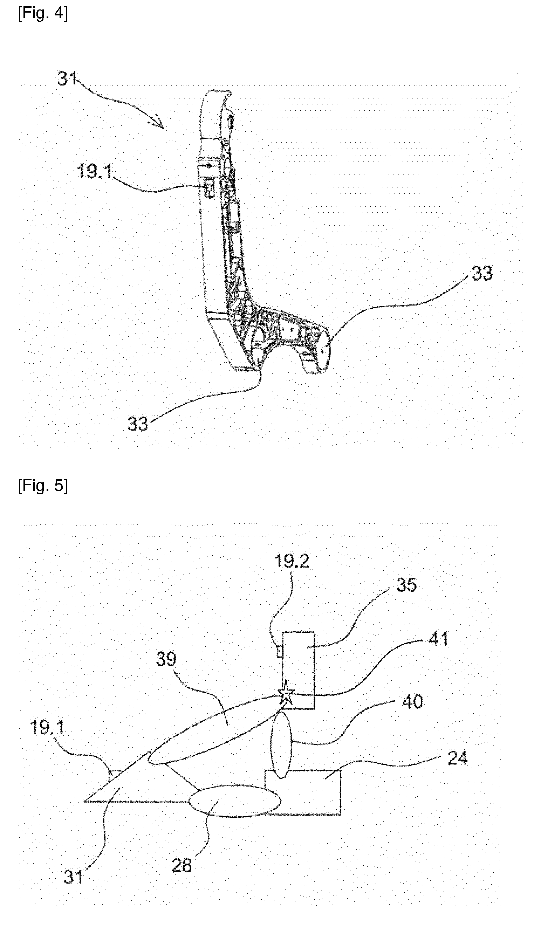

Des crosses 31 sont disposées entre les assises 24 ainsi qu'aux extrémités du siège 23. Ces crosses 31 présentent une forme de L et comportent des ouvertures 33 de passage des poutres de renforcement transversal 28, tel que cela est illustré par la figure 4. Ces crosses 31 portent des accoudoirs 32. Ces accoudoirs 32 pourront être montés mobiles en rotation par rapport aux crosses 31 entre une position relevée et une position abaissée.

Un dossier 25 pourra être monté sur la crosse 31 par l'intermédiaire d'une pièce de liaison 35, notamment une bielle de liaison. La pièce de liaison 35 est montée sur la crosse 31 par l'intermédiaire d'une liaison pivot. Le dossier 25 est alors mobile en rotation par rapport à la crosse 31 entre une position relevée dite aussi position TTL (pour Taxi, Take off, Landing) et une position relax dans laquelle le dossier 25 est incliné vers l'arrière. En variante, le dossier 25 pourra être monté fixe par rapport à la crosse 31.

Le siège 23 pourra également comporter une tablette repas 38 visible en figure 3b montée mobile en rotation entre une position stockée dans laquelle la tablette repas 38 est plaquée contre une face arrière du dossier 25 dans un plan sensiblement vertical et une position déployée dans laquelle la tablette repas 38 s'étend dans un plan sensiblement horizontal.

Certaines parties du siège 23, notamment l'assise 24 et le dossier 25, pourront être recouverts de coussins (non représentés) afin d'améliorer le confort du passager.

La figure 5 illustre une structure mécanique 10 formée par la pièce de liaison 35 fixée sur la crosse 31 par l'intermédiaire d'un organe de fixation 39, tel qu'une vis ou un rivet. La crosse 31 est liée mécaniquement à l'assise 24 par l'intermédiaire d'une poutre de renforcement 28.

Afin de contrôler la fatigue de cette structure 10, le premier capteur d'effort 19.1 pourra être disposé sur la crosse 31. Comme cela est illustré par la figure 4, le capteur d'effort 19.1 pourra être disposé sur la face arrière de la crosse 31. Le deuxième capteur d'effort 19.2 pourra être disposé sur la pièce de liaison 35 (cf. figure 3a). Une ou plusieurs pièces additionnelles 40 assurent également une transmission d'effort entre l'assise 24 et la pièce de liaison 35.

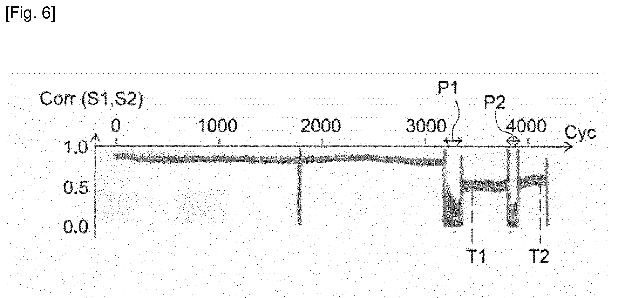

La figure 6 montre l'évolution du coefficient de corrélation Corr(S1, S2) entre les signaux S1, S2 retournés par les capteurs d'effort 19.1, 19.2 en fonction du nombre de cycles de fonctionnement Cyc. Suivant cet exemple de mise en œuvre, un cycle de fonctionnement Cyc consiste à appliquer une charge variable sur le dossier 25 pendant vingt secondes puis à arrêter l'application de cette charge variable. Bien entendu, lors de l'utilisation du siège par un passager, la durée d'application de la charge variable peut être différente et varier au cours du temps.

Cette figure met en évidence qu'il est possible de prédire une défaillance 41 à l'instant T1 plusieurs centaines de cycles de fonctionnement avant qu'elle ne se produise réellement. En effet, le module électronique de traitement 21 détecte que le coefficient de corrélation passe en dessous du seuil limite de fatigue K1 à l'instant T1, alors que la casse effective d'une pièce de la structure mécanique 10 se produit à l'instant T2, soit 600 cycles de fonctionnement après l'instant T1.

Il est à noter que les périodes P1 et P2 ne sont pas représentatives de l'état de fatigue de la structure mécanique 10 car aucune variation de charge n'est appliquée sur le dossier 25 pendant ces périodes P1 et P2. Le coefficient de corrélation Corr(S1, S2) entre les signaux S1 et S2 est aléatoire sur ces périodes P1 et P2 à cause du bruit engendré dans les capteurs 19.1, 19.2.

Etant donné que sur ces périodes P1 et P2, l'écart type et/ou la dérivation temporelle du premier signal S1 et/ou du deuxième signal S2 reste inférieure au seuil prédéterminé, le coefficient de corrélation Corr(S1, S2) n'est de préférence pas calculé par le système.

Suivant un autre mode de réalisation, le premier capteur d'effort 19.1 est disposé sur la crosse 31 et le deuxième capteur d'effort 19.2 est disposé sur l'accoudoir 32 (cf. figure 3a).

Suivant un autre mode de réalisation, le premier capteur d'effort 19.1 est disposé sur le dossier 25 et le deuxième capteur d'effort 19.2 est disposé sur la crosse 31 (cf. figure 3b).

Bien entendu, les différentes caractéristiques, variantes et/ou formes de réalisation de la présente invention peuvent être associées les unes avec les autres selon diverses combinaisons dans la mesure où elles ne sont pas incompatibles ou exclusives les unes des autres.

En outre, l'invention n'est pas limitée aux modes de réalisation décrits précédemment et fournis uniquement à titre d'exemple. Elle englobe diverses modifications, formes alternatives et autres variantes que pourra envisager l'homme du métier dans le cadre de la présente invention et notamment toutes combinaisons des différents modes de fonctionnement décrits précédemment, pouvant être pris séparément ou en association, pour autant que de telles combinaisons relèvent du champ de protection défini par les revendications annexées.

## Revendications

1. Système de mesure de la fatigue (11) d'une structure mécanique (10) **caractérisé en ce qu'**il comporte:
- un premier capteur d'effort (19.1) apte à générer un premier signal (S1) représentatif d'un effort appliqué sur une première pièce mécanique (13) de la structure mécanique (10),
- un deuxième capteur d'effort (19.2) apte à générer un deuxième signal (S2) représentatif d'un effort appliqué sur une deuxième pièce mécanique (14) de la structure mécanique (10),
- la première pièce mécanique (13) et la deuxième pièce mécanique (14) étant connectées mécaniquement entre elles, et **caractérisé en ce que** le système comporte :
- un module électronique de traitement (21) configuré pour calculer un coefficient de corrélation (Corr(S1, S2)) entre le premier signal (S1) et le deuxième signal (S2), et pour indiquer un état de fatigue de la structure mécanique (10) en fonction d'une évolution temporelle du coefficient de corrélation (Corr(S1, S2)) préalablement calculé,
- le coefficient de corrélation Corr(S1, S2) étant représentatif d'un transfert mécanique entre les deux pièces mécaniques (13, 14) du ou des efforts appliqués sur chaque pièce (13, 14) indépendamment des niveaux d'effort appliqués sur chaque pièce (13, 14).

2. Système selon la revendication 1, **caractérisé en ce que** le premier signal (S1) et le deuxième signal (S2) sont acquis sur une pluralité de périodes d'acquisition correspondant chacune à un cycle de fonctionnement, le coefficient de corrélation (Corr(S1, S2)) entre le premier signal (S1) et le deuxième signal (S2) étant calculé sur chaque période d'acquisition.

3. Système selon la revendication 2, **caractérisé en ce que** le module électronique de traitement (21) est configuré pour déterminer des indicateurs mathématiques pour chaque signal sur chaque période d'acquisition, tels qu'une moyenne, un minimum, un maximum, un écart type.

4. Système selon l'une quelconque des revendications 1 à 3, **caractérisé en ce que** le module électronique de traitement (21) est configuré pour calculer le coefficient de corrélation (Corr(S1, S2)) uniquement lorsqu'une variation de charge est détectée par le premier capteur d'effort (19.1) et/ou le deuxième capteur d'effort (19.2).

5. Système selon la revendication 4, **caractérisé en ce que** la variation de charge est détectée lorsqu'un écart type et/ou une dérivation temporelle du premier signal (S1) et/ou du deuxième signal (S2) est supérieur(e) à un seuil prédéterminé.

6. Système selon l'une quelconque des revendications 1 à 5, **caractérisé en ce que** le coefficient de corrélation (Corr(S1, S2)) calculé est choisi parmi le coefficient de Pearson ou le coefficient de Spearman ou est obtenu à partir d'une corrélation croisée.

7. Système selon l'une quelconque des revendications 1 à 6, **caractérisé en ce que** le premier capteur d'effort (19.1) et le deuxième capteur d'effort (19.2) sont des jauges de déformation.

8. Siège d'avion (23) comportant:
- une structure mécanique (10) constituée par un dossier (25) associé à une pièce de liaison (35) ainsi qu'une crosse (31) sur laquelle est fixée la pièce de liaison (35), et
- un système de mesure de la fatigue (11) tel que défini selon l'une quelconque des revendications précédentes.

9. Siège d'avion selon la revendication 8, **caractérisé en ce que** le premier capteur d'effort (19.1) est disposé sur la crosse (31) et le deuxième capteur d'effort (19.2) est disposé sur la pièce de liaison (35).

10. Siège d'avion selon la revendication 8, **caractérisé en ce qu'**il comporte en outre un accoudoir (32) monté sur la crosse (31), le premier capteur d'effort (19.1) étant disposé sur la crosse (31) et le deuxième capteur d'effort (19.2) étant disposé sur l'accoudoir (32).

11. Siège d'avion selon la revendication 8, **caractérisé en ce qu'**il comporte en outre une tablette repas (38) montée rotative par rapport au dossier (25), le premier capteur d'effort (19.1) étant disposé sur le dossier (25) et le deuxième capteur d'effort (19.2) étant disposé sur la crosse (31).

12. Aéronef équipé de sièges d'avion selon l'une quelconque des revendications 8 à 11.

## Patentansprüche

1. System (11) zur Ermüdungsmessung einer mechanischen Struktur (10), **dadurch gekennzeichnet, dass** es umfasst:
- einen ersten Kraftsensor (19.1), der ein erstes Signal (S1) erzeugen kann, das eine auf einen ersten mechanischen Teil (13) der mechanischen Struktur (10) wirkende Kraft darstellt,
- einen zweiten Kraftsensor (19.2), der ein zweites Signal (S2) erzeugen kann, das eine auf einen zweiten mechanischen Teil (14) der mechanischen Struktur (10) wirkende Kraft darstellt,
- wobei der erste mechanische Teil (13) und der zweite mechanische Teil (14) mechanisch miteinander verbunden sind, und **dadurch gekennzeichnet, dass** das System umfasst:
- ein elektronisches Verarbeitungsmodul (21), das so konfiguriert ist, dass es einen Korrelationskoeffizienten (Corr(S1, S2)) zwischen dem ersten Signal (S1) und dem zweiten Signal (S2) berechnet und den Ermüdungszustand der mechanischen Struktur (10) als Funktion der zeitlichen Entwicklung des zuvor berechneten Korrelationskoeffizienten (Corr(S1, S2)) anzeigt,
- wobei der Korrelationskoeffizient Corr(S1, S2) einen mechanischen Transfer zwischen den beiden mechanischen Teilen (13, 14) der auf jeden Teil (13, 14) ausgeübten Kraft(en) unabhängig von der Stärke der auf jeden Teil (13, 14) ausgeübten Kraft(en) darstellt.

2. System nach Anspruch 1, **dadurch gekennzeichnet, dass** das erste Signal (S1) und das zweite Signal (S2) über eine Mehrzahl von Erfassungsperioden erfasst werden, die jeweils einem Betriebszyklus entsprechen, wobei der Korrelationskoeffizient (Corr(S1, S2)) zwischen dem ersten Signal (S1) und dem zweiten Signal (S2) über jede Erfassungsperiode berechnet wird.

3. System nach Anspruch 2, **dadurch gekennzeichnet, dass** das elektronische Verarbeitungsmodul (21) so konfiguriert ist, dass es für jedes Signal über jede Erfassungsperiode mathematische Indikatoren wie einen Mittelwert, ein Minimum, ein Maximum und eine Standardabweichung ermittelt.

4. System nach einem der Ansprüche 1 bis 3, **dadurch gekennzeichnet, dass** das elektronische Verarbeitungsmodul (21) so konfiguriert ist, dass es den Korrelationskoeffizienten (Corr(S1, S2)) nur dann berechnet, wenn eine Laständerung durch den ersten Kraftsensor (19.1) und/oder den zweiten Kraftsensor (19.2) erfasst wird.

5. System nach Anspruch 4, **dadurch gekennzeichnet, dass** die Laständerung erkannt wird, wenn eine Standardabweichung und/oder eine zeitliche Ableitung des ersten Signals (S1) und/oder des zweiten Signals (S2) größer als ein vorbestimmter Schwellenwert ist.

6. System nach einem der Ansprüche 1 bis 5, **dadurch gekennzeichnet, dass** der berechnete Korrelationskoeffizient (Corr(S1, S2)) aus dem Pearson-Koeffizienten oder dem Spearman-Koeffizienten ausgewählt oder aus einer Kreuzkorrelation ermittelt wird.

7. System nach einem der Ansprüche 1 bis 6, **dadurch gekennzeichnet, dass** der erste Kraftsensor (19.1) und der zweite Kraftsensor (19.2) Dehnungsmessstreifen sind.

8. Flugzeugsitz (23), mit:
- einer mechanischen Struktur (10) mit einer Rückenlehne (25), die mit einem Verbindungsstück (35) und einer Halterung (31) verbunden ist, an der das Verbindungsstück (35) befestigt ist, und
- einem Ermüdungsmesssystem (11) nach einem der vorhergehenden Ansprüche.

9. Flugzeugsitz nach Anspruch 8, **dadurch gekennzeichnet, dass** der erste Kraftsensor (19.1) an der Halterung (31) und der zweite Kraftsensor (19.2) am Verbindungsstück (35) angeordnet ist.

10. Flugzeugsitz nach Anspruch 8, **dadurch gekennzeichnet, dass** er ferner eine auf der Halterung (31) montierte Armlehne (32) umfasst, wobei der erste Kraftsensor (19.1) auf der Halterung (31) und der zweite Kraftsensor (19.2) auf der Armlehne (32) angeordnet ist.

11. Flugzeugsitz nach Anspruch 8, **dadurch gekennzeichnet, dass** er ferner eine Essenplatte (38) umfasst, die drehbar relativ zur Rückenlehne (25) angeordnet ist, wobei der erste Kraftsensor (19.1) an der Rückenlehne (25) und der zweite Kraftsensor (19.2) an der Halterung (31) angeordnet ist.

12. Luftfahrzeug, das mit Flugzeugsitzen gemäß einem der Ansprüche 8 bis 11 ausgestattet ist.

## Claims

1. A fatigue measurement system (11) for a mechanical structure (10) **characterized in that** it comprises:
- a first force sensor (19.1) capable of generating a first signal (S1) representative of a force applied to a first mechanical part (13) of the mechanical structure (10),
- a second force sensor (19.2) capable of generating a second signal (S2) representative of a force applied to a second mechanical part (14) of the mechanical structure (10),
- the first mechanical part (13) and the second mechanical part (14) being mechanically connected to each other, and **characterized in that** the system comprises:
- an electronic processing module (21) configured to calculate a correlation coefficient (Corr(S1, S2)) between the first signal (S1) and the second signal (S2), and to indicate a fatigue state of the mechanical structure (10) as a function of a time evolution of the correlation coefficient (Corr(S1, S2)) previously calculated,
- the correlation coefficient Corr(S1, S2) being representative of a mechanical transfer between the two mechanical parts (13, 14) of the force(s) applied on each part (13, 14) independently of the levels of force applied on each part (13, 14).

2. The system according to Claim 1, **characterized in that** the first signal (S1) and the second signal (S2) are acquired over a plurality of acquisition periods, each corresponding to one operating cycle, the correlation coefficient (Corr(S1, S2)) between the first signal (S1) and the second signal (S2) being calculated over each acquisition period.

3. The system according to Claim 2, **characterized in that** the electronic processing module (21) is configured to determine mathematical indicators for each signal over each acquisition period, such as an average, a minimum, a maximum, a standard deviation.

4. The system according to any one of the claims 1 to 3, **characterized in that** the electronic processing module (21) is configured to calculate the correlation coefficient (Corr(S1, S2)) only when a load variation is detected by the first force sensor (19.1) and/or the second force sensor (19.2).

5. The system according to Claim 4, **characterized in that** the load variation is detected when a standard deviation and/or a time derivative of the first signal (S1) and/or the second signal (S2) is greater than a predetermined threshold.

6. The system according to any one of the claims 1 to 5, **characterized in that** the calculated correlation coefficient (Corr(S1, S2)) is chosen from the Pearson coefficient or the Spearman coefficient or is obtained from a cross correlation.

7. The system according to any one of the claims 1 to 6, **characterized in that** the first force sensor (19.1) and the second force sensor (19.2) are strain gauges.

8. An aircraft seat (23) comprising:
- a mechanical structure (10) comprising a backrest (25) associated with a connecting piece (35) and a bracket (31) to which the connecting piece (35) is fixed, and
- a fatigue measurement system (11) as defined according to any one of the preceding claims.

9. An aircraft seat according to Claim 8, **characterized in that** the first force sensor (19.1) is arranged on the bracket (31) and the second force sensor (19.2) is arranged on the connecting piece (35).

10. An aircraft seat according to Claim 8, **characterized in that** it further comprises an armrest (32) mounted on the bracket (31), the first force sensor (19.1) being arranged on the bracket (31) and the second force sensor (19.2) being arranged on the armrest (32).

11. The aircraft seat according to Claim 8, **characterized in that** it further comprises a meal flap (38) mounted rotatably relative to the backrest (25), the first force sensor (19.1) being arranged on the backrest (25) and the second force sensor (19.2) being arranged on the bracket (31).

12. An aircraft equipped with aircraft seats according to any one of the claims 8 to 11.
